# FASCICULE DE BREVET EUROPEEN

(11) **EP 1 525 507 B1**
(45) Date de publication et mention de la délivrance du brevet: **24.05.2006**
(21) Numéro de dépôt: 03761584.6
(22) Date de dépôt: 19.06.2003
(51) Int. Cl.: G02B 27/28, G02B 5/30

(54) **DISPOSITIF D'ILLUMINATION A LUMIERE POLARISEE**
BELEUCHTUNGSANLAGE FÜR POLARISIERTES LICHT
POLARIZED LIGHT ILLUMINATION DEVICE

(30) Priorité: 28.06.2002 FR 0208099
(43) Date de publication de la demande: 27.04.2005
(73) Titulaire: Thomson Licensing, 92100 Boulogne-Billancourt (FR)
(72) Inventeur: BENOIT, Pascal, F-35700 Rennes (FR); DRAZIC, Valter, F-35830 Betton (FR); SARAYEDDINE, Khaled, F-35410 Nouvoitou (FR)
(74) Mandataire: Browaeys, Jean-Philippe
(86) Numéro de dépôt international: PCT/EP2003/050244
(87) Numéro de publication internationale: WO 2004/003631

(56) Documents cités:
- EP-A- 0 431 894
- DE-A- 19 638 645
- SU-A- 1 130 778
- US-A- 3 741 660
- US-A- 4 786 802
- PATENT ABSTRACTS OF JAPAN vol. 008, no. 151 (P-286), 13 juillet 1984 (1984-07-13) & JP 59 048716 A (ERUMOSHIYA:KK), 21 mars 1984 (1984-03-21)
- BALAKIN A V ET AL: "Experimental observation of the interference of three- and five-wave mixing processes into the signal of second harmonic generation in bacteriorhodopsin solution" OPTICS COMMUNICATIONS, NORTH-HOLLAND PUBLISHING CO. AMSTERDAM, NL, vol. 141, no. 5-6, 15 septembre 1997 (1997-09-15), pages 343-352, XP004093969 ISSN: 0030-4018

## Description

L'invention concerne un dispositif d'illumination à lumière polarisée. Elle est applicable par exemple dans l'illumination de modulateurs spaciaux de lumière nécessitant pour être efficace de la lumière polarisée.

Certains dispositifs, en effet, fonctionnent avec de la lumière polarisée linéairement selon une seule direction. C'est le cas, par exemple, de la visualisation à cristaux liquides qui utilise des modulateurs à cristaux liquides pour permettre de visualiser des informations et/ou des images.

Dans de tels systèmes plusieurs solutions sont possibles. On peut utiliser une source de lumière polarisée (laser), mais qui doit présenter une bonne stabilité en polarisation et fournir suffisamment de puissance lumineuse.

On peut également utiliser une source de lumière non polarisée et on prévoit alors de séparer les deux polarisations de la lumière. La lumière polarisée selon une première direction est utilisée directement ou quasi-directement. Pour éviter de perdre l'énergie véhiculée par la lumière polarisée selon une deuxième direction perpendiculaire à la première direction et éviter ainsi de n'utiliser que la moitié de la puissance de la source lumineuse, on fait subir à cette lumière un traitement permettant de faire tourner sa polarisation de 90° de façon à ce qu'elle devienne polarisée selon la première direction.

Pour cela, on dispose sur le trajet de la lumière à traiter un dispositif appelé lame λ/4 ayant pour effet de faire tourner la polarisation de la lumière de 90°. Il est connu dans la technique que cette lame λ/4 peut prendre la forme d'un film en matériau polymère mais un tel film présente l'inconvénient de se détériorer à la chaleur et dans le cas de la visualisation à cristaux liquide, par exemple, on a besoin d'une énergie non négligeable pour visionner un écran. La lame λ/4 peut également prendre la forme d'une lame à quartz. Mais un tel dispositif présente l'inconvénient de ne pas être achromatique et dans le cas de systèmes couleur cela constitue un grave inconvénient (voir par exemple le dispositif décrit dans la publication EP 0 431 894A).

L'invention a donc pour objet un dispositif d'éclairement dont les caractéristiques sont stables en température et qui n'induise pas ou quasiment pas de distorsions chromatiques.

L'invention concerne donc un dispositif optique d'illumination à lumière polarisée qui comprend :
- une source de lumière émettant un premier faisceau de lumière,
- un dispositif optique de polarisation du type Fresnel Rhomb recevant, par une face d'entrée le premier faisceau de lumière qui est réfléchi au moins deux fois par au moins deux faces opposées dudit dispositif optique de polarisation et fournissant, par une face de sortie , au moins un deuxième faisceau,
- un polariseur réflectif disposé en vis à vis de la face de sortie du dispositif de polarisation Fresnel Rhomb pour recevoir le deuxième faisceau de lumière de façon à laisser passer la lumière polarisée linéairement selon une première direction et à réfléchir la lumière présentant toute autre polarisation,
- un dispositif de réflexion disposé entre la face d'entrée du dispositif de polarisation et la source lumineuse de façon à laisser passer ledit premier faisceau de lumière mais à réfléchir la lumière renvoyée par le polariseur réflectif.

Ce dispositif d'illumination, selon un exemple de réalisation de l'invention, comprend également :
- un premier guide optique possédant une face d'entrée destinée à recevoir ledit premier faisceau de lumière, une face de sortie plaquée contre la face d'entrée du dispositif de polarisation Fresnel Rhomb avec son axe optique perpendiculaire à ladite face d'entrée, la section droite de ce premier guide étant sensiblement de mêmes dimensions que la surface de la face d'entrée,
- ainsi qu'un deuxième guide optique possédant une face d'entrée plaquée contre la face de sortie du dispositif de polarisation Fresnel Rhomb et une face de sortie émettant vers le polariseur réflectif de la lumière reçue de la source, l'axe optique du deuxième guide optique étant perpendiculaire à la face de sortie du dispositif de polarisation Fresnel Rhomb, et la section droite de ce deuxième guide étant sensiblement de mêmes dimensions que la surface de la face d'entrée.

Selon une forme de réalisation de l'invention, l'un, l'autre ou les deux guides fonctionnent en intégrateurs de lumière.

On pourra prévoir que la face de sortie du dispositif optique de polarisation Fresnel Rhomb a une forme similaire à celle d'une surface destinée à être illuminée par ledit dispositif d'illumination. Le dispositif de polarisation Fresnel Rhomb ayant une section droite rectangulaire ou carrée, lesdits guides optiques ont de préférence des sections droites rectangulaires ou carrées.

On pourra également prévoir les dispositions suivantes prises indépendamment ou en combinaison:
- le polariseur réflectif est disposé en vis à vis de la face de sortie du deuxième guide ;
- le polariseur réflectif est orienté à 45° par rapport aux dites faces opposées dudit dispositif optique de polarisation ;
- le dispositif de réflexion est situé sur la face d'entrée du dispositif de polarisation de Fresnel Rhomb ou sur la face d'entrée du premier guide optique ;
- les au moins deux dites faces opposées du dispositif optique de polarisation Fresnel-Rhomb induisent sur un faisceau lumineux un déphasage total de 90° entre les composantes de polarisations S et P lors d'un passage de ce faisceau dans le dispositif optique de polarisation Fresnel-Rhomb ;
- le dispositif de réflexion comporte une couche d'un matériau réfléchissant comportant une zone non réfléchissante pour permettre le passage dudit premier faisceau de lumière ;
- la source lumineuse comporte un réflecteur éclairé par une source de lumière et focalisant la lumière dans le dispositif de polarisation Fresnel Rhomb ;
- l'axe du premier faisceau de lumière coïncide avec l'axe optique du premier guide optique ;
- ledit premier faisceau de lumière n'est pas collimaté ;
- ledit premier faisceau de lumière est convergent ;

Enfin, l'invention est applicable à un système de visualisation dans lequel un dispositif de visualisation est disposé en vis à vis du polariseur réflectif de façon à être éclairé par la lumière transmise par ce polariseur réflectif. Ce dispositif de visualisation peut être un modulateur à cristal liquide.

Les différents objets et caractéristiques de l'invention apparaîtront plus clairement dans la description qui va suivre faite à titre d'exemple non limitatif et dans les figures annexées qui représentent:
- la figure 1, un exemple général de réalisation d'un dispositif d'illumination selon l'invention,
- les figures 2a et 2b, un dispositif de polarisation Fresnel Rhomb,
- la figure 3, un exemple plus détaillé d'un exemple de réalisation de ce dispositif.

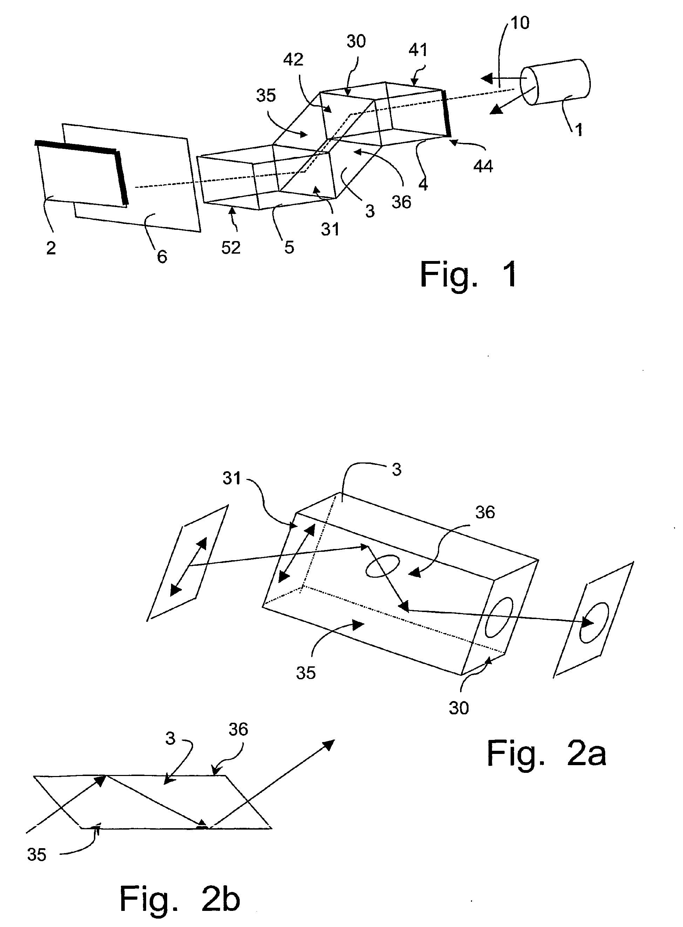

En se reportant à la figure 1, on va donc décrire tout d'abord un exemple général de réalisation d'un dispositif selon l'invention.

Ce dispositif comporte :
- une source lumineuse 1 émettant un faisceau 10 de lumière non polarisée ;
- un dispositif intégrateur/polariseur de la lumière 3/4/5 ;
- un polariseur réflectif 6 convenablement orienté pour laisser passer la lumière polarisée linéairement selon une direction de polarisation;
- un dispositif de réflexion 44 situé entre la source lumineuse 1 et le dispositif intégrateur polariseur, ce dispositif de réflexion permettant le passage du faisceau 10 dans le dispositif intégrateur polariseur mais réfléchissant la lumière venant en sens inverse comme cela sera décrit ci-après ;
- un objet 2 destiné à être illuminé en lumière polarisée.

Le dispositif intégrateur/polariseur 3/4/5 a pour rôle d'une part, d'obtenir un éclairage uniforme rectangulaire à partir d'une source non rectangulaire et, d'autre part, de polariser la lumière comme cela sera décrit dans la description qui va suivre. Ce dispositif intégrateur/polariseur 3/4/5 comporte dans sa partie centrale essentiellement un dispositif de polarisation Fresnel Rhomb 3 connu dans la technique. On trouvera une description d'un tel dispositif dans l'ouvrage OPTICS - 2^{ème} édition - de Eugène HECHT - Addison-Wesley Publishing Company, Inc.- 1987.

Ce dispositif possède au moins deux faces permettant au moins deux réflexions d'un faisceau d'entrée. Par exemple comme cela est représenté sur les figures 2a et 2b, il peut être conçu sous forme d'un parallélépipède dont les faces latérales 35 et 36 sont planes. La face d'entrée 30 du dispositif 3 forme un angle tel avec les faces latérales qu'un rayon lumineux entrant dans le guide par la face d'entrée 30 sous incidence quasi-normale, subit une première réflexion sur une face latérale 35, puis une deuxième réflexion sur une face latérale 36 opposée à la précédente pour être dirigé vers la face de sortie 31. De préférence la face de sortie est sensiblement orthogonale à la direction du rayon lumineux de sortie et est donc parallèle à la face d'entrée 30. L'inclinaison du dispositif par rapport à la direction d'incidence du faisceau lumineux d'entrée est calculée en fonction de l'indice de réfraction du matériau du dispositif 5 pour avoir les deux réflexions précédentes à l'intérieur du dispositif et pour obtenir le fonctionnement décrit ci-après.

Le fonctionnement d'un tel dispositif Fresnel-Rhomb repose sur une double réflexion de la lumière entrant par la face 30, dont le déphasage de chaque réflexion totale entre les polarisations P et S est de l'ordre de 45° pour un rayon moyen sensiblement perpendiculaire à la face d'entrée 30. Ainsi lors d'un passage dans le dispositif 3 le déphasage total entre P et S sera de 90°. Il en résulte que selon la polarisation du faisceau incident, l'action du dispositif 3 pourra être la suivante :
- pour une polarisation de la lumière d'entrée linéaire à +45° (amplitude de P et S égale et déphasage entre P et S nul), la polarisation en sortie sera circulaire droite ;
- pour une polarisation linéaire à -45° (amplitude de P et S égale et déphasage entre P et S de 180°), la polarisation en sortie sera circulaire gauche ;
- pour une polarisation circulaire droite (amplitude de P et S égale et déphasage entre P et S de 90°), la polarisation en sortie sera linéaire a -45° ;
- pour une polarisation circulaire gauche (amplitude de P et S égale et déphasage entre P et S de -90°), la polarisation en sortie sera linéaire a 45° ;
- pour une polarisation linéaire horizontale, la polarisation finale sera inchangée ;
- pour une polarisation linéaire verticale, la polarisation finale sera inchangée ;
- pour une polarisation linéaire quelconque (déphasage nul), la polarisation de sortie sera elliptique mais non circulaire.

Donc dans le cas d'un faisceau incident non polarisé (faisceau fourni par la lampe 1) la lumière effectuant un premier passage dans le dispositif 3 sort principalement non polarisée par la face 31. Le polariseur réflectif 6 est convenablement orienté pour laisser passer la lumière polarisée selon une direction de polarisation. Par exemple, l'orientation du polariseur réflectif 6 sera de préférence à 45° par rapport aux faces de réflexion 35, 36 du dispositif 3. La lumière non transmise est réfléchie par le polariseur réflectif 6 qui renvoie de la lumière polarisée linéairement selon une direction à 45°. Dans ces conditions, le polariseur réflectif doit être orienté de telle façon que la direction de la polarisation de la lumière réfléchie forme un angle de 45° environ avec le plan d'incidence moyen sur la face 36.

Comme on peut le voir sur la figure 2a, un faisceau polarisé linéairement voit sa polarisation transformée en polarisation elliptique lors de la première réflexion (sur la face 36), puis en polarisation circulaire lors de la deuxième réflexion (sur la face 35). Ce faisceau est ensuite réfléchi vers l'intérieur du dispositif 3 par le dispositif de réflexion 44 avec une polarisation circulaire inversée. Dans le dispositif 3 la lumière réfléchie par le dispositif 44 est à nouveau réfléchie en sens inverse par la face 35 avec une polarisation elliptique, puis par la face 36 avec une polarisation linéaire qui est maintenant perpendiculaire à la polarisation de la lumière qui avait été précédemment réfléchie par le polariseur réflectif 6. Cette lumière traverse alors le polariseur réflectif 6.

Sur la figure 1, on voit que le dispositif de polarisation 3 est situé entre deux guides 4 et 5 accolés respectivement aux faces d'entrée 30 et de sortie 31 du dispositif 3. Selon l'exemple de réalisation de la figure 1, la face d'entrée 41 du guide 4 et la face de sortie 52 du guide 5 sont sensiblement perpendiculaires respectivement aux directions d'entrée et de sortie de l'axe du faisceau lumineux à traiter. Les guides optiques 4 et 5 ont la particularité de fonctionner en intégrateur et ils sont, de préférence, de formes parallélépipédiques. Comme cela est représenté sur la figure 1 leurs sections droites peuvent présenter sensiblement les mêmes dimensions que les faces d'entrée et de sortie 30 et 31 respectivement du dispositif 3.

Sans que cela soit obligatoire, la longueur du dispositif 3 est calculée de telle façon que, pour un rayon moyen du faisceau 10 entrant dans le dispositif par le centre de la face 30, la zone de sortie de ce rayon moyen soit de préférence située sensiblement au centre de la face de sortie 31.

De plus, dans le cas ou le dispositif 2 de la figure 1, qui doit être illuminé par le faisceau lumineux traité, est un modulateur spatial de lumière de forme rectangulaire, on prévoira avantageusement que la section droite du guide 5 ait sensiblement la forme du modulateur spatial de lumière à un rapport d'homothétie près.

De plus, on peut prévoir, pour réaliser le dispositif de réflexion 44 que la face d'entrée 41 du guide 4 ou la face d'entrée 30 du dispositif 3 soit réfléchissante à la lumière renvoyée par le polariseur réflectif 6. Il est prévu une zone non réfléchissante 43 pour le passage du faisceau incident 10. Dans l'exemple de la figure 1, on a prévu que c'est la face 41 du guide 4 qui est réfléchissante.

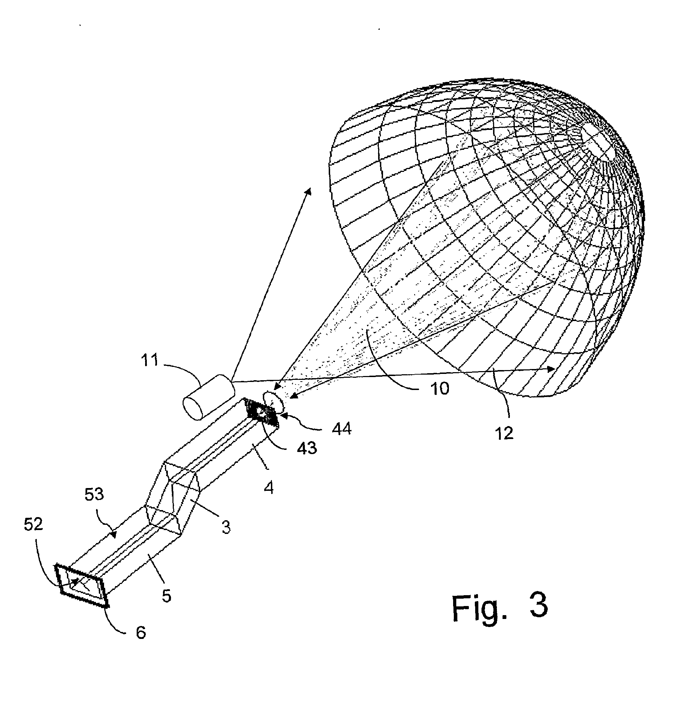

La figure 3 représente un exemple de réalisation plus détaillé du dispositif de l'invention. Ce dispositif comporte un miroir 12 éclairé par une source lumineuse 11 et permettant d'injecter la lumière dans le guide 4. Ce miroir peut être parabolique et la source 11 est située au foyer du miroir. La face 41 est traitée réfléchissante ou est munie d'une surface 44 réfléchissante pour la lumière réfléchie par le polariseur réflectif 6 et comporte une zone non traitée 43 pour permettre le passage du faisceau lumineux fourni par la source 11 et le miroir 12.

Selon un exemple de réalisation préféré de l'invention, le faisceau 10 injecté dans le guide 4 n'est pas collimaté, notamment, il pourra être convergent pour qu'il puisse être injecté dans le dispositif 3 par la zone non traitée 43. L'axe du faisceau 10 pourra être orienté selon l'axe optique du guide d'entrée 4, mais cela n'est pas obligatoire.

Le dispositif d'illumination de l'invention permet ainsi de fournir une lumière polarisée linéairement selon une seule direction sans avoir à craindre les problèmes d'échauffement et de chromaticité évoqués en début de description. De plus, l'utilisation de guides 4 et 5 intégrateurs de la lumière avec un faisceau incident 10 non collimaté permet d'obtenir un éclairage de sortie uniforme et d'adapter la forme du faisceau incident à la surface à éclairer. Notamment, la section droite du guide de sortie pourra avoir une forme adaptée à la surface à éclairer.

Dans la description qui précède et dans les figures annexées on a considéré que les faces 35 et 36, sur lesquelles ont lieu les réflexions à l'intérieur du dispositif 3, sont parallèles. Cependant, selon une variante de réalisation on peut les prévoir non parallèles mais leurs orientations respectives doivent être telles que les déphasages induits successivement par les réflexions sur les deux faces 35 et 36 soient au total de 90° (lors d'un passage de la lumière). De plus, dans la description qui précède on a prévu que lors d'un passage, dans le dispositif 3, la lumière était réfléchie deux fois (sur les deux faces opposées 35 et 36) mais sans sortir du cadre de l'invention, on pourrait prévoir un plus grand nombre de réflexions, l'objectif étant que lors d'un passage on induise un déphasage de 90° sur les polarisations S et P de la lumière. Dans ces conditions, le dispositif 3 pourrait ne pas être parallélépipédique :
- les faces 35 et 36 pourraient ne pas être parallèles,
- le dispositif 3 pourrait comporter un plus grand nombre de faces pour la réflexion de la lumière à l'intérieur du dispositif.

Par ailleurs, on pourra prévoir de plaquer le polariseur réflectif 6 contre la face de sortie 52 du guide 5 ce qui fournira un dispositif compact.

On pourra également, selon une variante de réalisation, prévoir de plaquer l'objet à éclairer 2 contre le polariseur réflectif 6. Dans le cas d'un système de visualisation monovalve où l'objet 2 est un modulateur spatial de lumière tel qu'un écran à cristal liquide éclairé par transmission on pourra adapter les dimensions de la face de sortie 51 du guide 5 aux dimensions de la partie de l'écran à cristal liquide à éclairer ce qui fournira un système compact.

## Revendications

1. Dispositif optique d'illumination à lumière polarisée comprenant une source de lumière (1) émettant un premier faisceau de lumière (10), comportant un dispositif optique de polarisation du type Fresnel Rhomb (3) recevant, par une face d'entrée (30) le premier faisceau de lumière (10) qui est réfléchi au moins deux fois sur au moins deux faces opposées (35,36) dudit dispositif optique de polarisation et fournissant, par une face de sortie (31), au moins un deuxième faisceau ; un polariseur réflectif (6) disposé en vis à vis de la face de sortie (31) du dispositif de polarisation de Fresnel Rhomb pour recevoir le deuxième faisceau de lumière **caractérisé en ce que** ledit polarisateur réflectif laisse passer la lumière polarisée linéairement selon une première direction et à réfléchit la lumière présentant toute autre polarisation ; et **en ce qu'**un dispositif de réflexion (44) disposé entre la face d'entrée (30) du dispositif de polarisation (3) et la source lumineuse (1) laisse passer ledit premier faisceau de lumière (10) mais réfléchit la lumière renvoyée par le polariseur réflectif (6).

2. Dispositif optique d'illumination selon l'une des revendications 1 ou 2, **caractérisé en ce qu'**il comporte ;
- un premier guide optique (4) possédant une face d'entrée (41) destinée à recevoir ledit premier faisceau de lumière (10), une face de sortie plaquée (42) contre la face d'entrée (30) du dispositif de polarisation Fresnel Rhomb (3) avec son axe optique (40) perpendiculaire à ladite face d'entrée (30), la section droite de ce premier guide étant sensiblement de mêmes dimensions que la surface de ladite face d'entrée (30) du dispositif de polarisation Fresnel Rhomb (3),
- ainsi qu'un deuxième guide optique (5) possédant une face d'entrée (51) plaquée contre la face de sortie (31) du dispositif de polarisation Fresnel Rhomb (3) et une face de sortie émettant vers le polariseur réflectif (6) de la lumière reçue de la source (1), l'axe optique (50) du deuxième guide optique étant perpendiculaire à la face de sortie (31) du dispositif de polarisation Fresnel Rhomb (3), et la section droite de ce deuxième guide étant sensiblement de mêmes dimensions que la surface de ladite face de sortie (31) du dispositif de polarisation Fresnel Rhomb.

3. Dispositif optique d'illumination selon la revendication 2, **caractérisé en ce que** l'un, l'autre ou les deux guides optiques fonctionnent en intégrateurs de lumière.

4. Dispositif optique d'illumination selon la revendication 1, **caractérisé en ce que** la face de sortie (31) du dispositif optique de polarisation Fresnel Rhomb (3) a une forme similaire à celle d'une surface destinée à être illuminée par ledit dispositif d'illumination.

5. Dispositif optique d'illumination selon l'une des revendications 2, 3 ou 4, **caractérisé en ce que** le dispositif de polarisation de Fresnel Rhomb ayant une section droite rectangulaire ou carrée, lesdits guides optiques ont des sections droites rectangulaires ou carrées

6. Dispositif optique d'illumination selon la revendication 2, **caractérisé en ce que** le polariseur réflectif (6) est disposé en vis à vis de la face de sortie (52) du deuxième guide (5).

7. Dispositif optique d'illumination selon l'une quelconque des revendications 1 ou 2, **caractérisé en ce que** le polariseur réflectif (6) est orienté environ à 45° par rapport aux dites faces opposées (35,36) dudit dispositif optique de polarisation (3).

8. Dispositif optique d'illumination selon l'une des revendications 1 ou 2, **caractérisé en ce que** le dispositif de réflexion (44) est situé sur la face d'entrée (30) du dispositif de polarisation de Fresnel Rhomb (3) ou sur la face d'entrée (41) du premier guide optique (4) .

9. Dispositif optique d'illumination selon la revendication 8, **caractérisé en ce que** le dispositif de réflexion (44) comporte une couche d'un matériau réfléchissant comportant une zone (43) non réfléchissante pour permettre le passage dudit premier faisceau de lumière (10).

10. Dispositif optique d'illumination selon l'une quelconque des revendications 1 ou 2, **caractérisé en ce que** les au moins deux dites faces opposées (35,36) du dispositif optique de polarisation (3) induisent sur un faisceau lumineux un déphasage total de 90° entre les composantes de polarisations S et P dudit faisceau.

11. Dispositif optique d'illumination selon la revendication 10, **caractérisé en ce que** les deux dites faces opposées (35,36) du dispositif optique de polarisation (3) sont parallèles.

12. Dispositif optique d'illumination selon l'une quelconque des revendications précédentes, **caractérisé en ce que** la source lumineuse (1) comporte un réflecteur (12) éclairé par une source de lumière (11) et focalisant la lumière dans le dispositif de polarisation Fresnel Rhomb (3).

13. Dispositif optique d'illumination selon la revendication 2, **caractérisé en ce que** l'axe du premier faisceau de lumière (10) coïncide avec l'axe optique du premier guide optique (4).

14. Dispositif optique d'illumination selon l'une des revendications 1, 2 ou 11, **caractérisé en ce que** ledit premier faisceau de lumière n'est pas collimaté.

15. Dispositif optique d' illumination selon la revendication 12, **caractérisé en ce que** ledit premier faisceau de lumière (10) est convergent.

16. Dispositif optique d' illumination selon l'une quelconque des revendications précédentes, **caractérisé en ce qu'**il comporte un dispositif de visualisation (2) situé en vis à vis du polariseur réflectif (6) de façon à être éclairé par la lumière transmise par ce polariseur réflectif.

17. Dispositif optique d'illumination selon la revendication 13, **caractérisé en ce que** ledit dispositif de visualisation est un modulateur à cristal liquide.

## Claims

1. A polarized light optical illumination device comprising a light source (1) emitting a first light beam (10), comprising: a Fresnel-Rhomb type optical polarization device (3) receiving, via an input face (30), the first light beam (10) which is reflected at least twice by at least two opposite faces (35, 36) of said optical polarization device and supplying, via an output face (31), at least a second beam; a reflective polarizer (6) positioned facing the output face (31) of the Fresnel-Rhomb polarization device to receive the second light beam, **characterized in that** said reflective polarizer allows the linearly polarized light to pass in a first direction and reflects light presenting any other polarization; and **in that** a reflection device (44) positioned between the input face (30) of the polarization device (3) and the light source (1) allows said first light beam (10) to pass but reflects the light returned by the reflective polarizer (6).

2. The optical illumination device as claimed in either of claims 1 or 2, **characterized in that** it comprises:
- a first optical guide (4) having an input face (41) designed to receive said first light beam (10), an output face pressed (42) against the input face (30) of the Fresnel-Rhomb polarization device (3) with its optical axis (40) perpendicular to said input face (30), the cross section of this first guide being roughly of the same dimensions as the surface of said input face (30) of the Fresnel-Rhomb polarization device (3),
- and a second optical guide (5) having an input face (51) pressed against the output face (31) of the Fresnel-Rhomb polarization device (3) and an output face emitting towards the reflective polarizer (6) light received from the source (1), the optical axis (50) of the second optical guide being perpendicular to the output face (31) of the Fresnel-Rhomb polarization device (3), and the cross section of this second guide being roughly of the same dimensions as the surface of said output face (31) of the Fresnel-Rhomb polarization device.

3. The optical illumination device as claimed in claim 2, **characterized in that** either or both of the optical guides operate as light integrators.

4. The optical illumination device as claimed in claim 1, **characterized in that** the output face (31) of the Fresnel-Rhomb optical polarization device (3) has a shape similar to that of a surface intended to be illuminated by said illumination device.

5. The optical illumination device as claimed in one of claims 2, 3 or 4, **characterized in that** since the Fresnel-Rhomb polarization device has a rectangular or square cross section, said optical guides have rectangular or square cross sections.

6. The optical illumination device as claimed in claim 2, **characterized in that** the reflective polarizer (6) is positioned facing the output face (52) of the second guide (5).

7. The optical illumination device as claimed in either of claims 1 or 2, **characterized in that** the reflective polarizer (6) is oriented approximately at 45° relative to said opposite faces (35, 36) of said optical polarization device (3).

8. The optical illumination device as claimed in either of claims 1 or 2, **characterized in that** the reflection device (44) is located on the input face (30) of the Fresnel-Rhomb polarization device (3) or on the input face (41) of the first optical guide (4).

9. The optical illumination device as claimed in claim 8, **characterized in that** the reflection device (44) includes a layer of a reflective material including a non-reflecting area (43) to allow the passage of said first light beam (10).

10. The optical illumination device as claimed in either of claims 1 or 2, **characterized in that** said two or more opposite faces (35, 36) of the optical polarization device (3) induce on a light beam a total phase shift of 90° between the S and P polarization components of said beam.

11. The optical illumination device as claimed in claim 10, **characterized in that** both said opposite faces (35, 36) of the optical polarization device (3) are parallel.

12. The optical illumination device as claimed in any one of the preceding claims, **characterized in that** the light source (1) includes a reflector (12) lit by a light source (11) and focusing the light in the Fresnel-Rhomb polarization device (3).

13. The optical illumination device as claimed in claim 2, **characterized in that** the axis of the first light beam (10) coincides with the optical axis of the first optical guide (4).

14. The optical illumination device as claimed in one of claims 1, 2 or 11, **characterized in that** said first light beam is not collimated.

15. The optical illumination device as claimed in claim 12, **characterized in that** said first light beam (10) is convergent.

16. The optical illumination device as claimed in any one of the preceding claims, **characterized in that** it includes a display device (2) located facing the reflective polarizer (6) so as to be lit by the light transmitted by this reflective polarizer.

17. The optical illumination device as claimed in claim 13, **characterized in that** said display device is a liquid crystal modulator.

## Patentansprüche

1. Optische Beleuchtungsvorrichtung, die eine Lichtquelle (1) mit polarisiertem Licht einschliesst, die einen ersten Lichtstrahl (10) aussendet und enthält:
- eine optische Vorrichtung zur Polarisation vom Typ Fresnel-Rhombus (3), die durch eine Eintrittsfläche (30) den ersten Lichtstrahl (10) empfängt, der mindestens zwei Mal durch zwei sich einander gegenüber liegenden Flächen (35, 36) dieser optischen Polarisationsvorrichtung zurück geworfen wird und über eine Austrittsfläche (31) mindestens einen zweiten Strahl liefert.
- einen reflektierenden Polarisator (6), der gegenüber der Austrittsfläche der Fresnel-Rhombus Polarisationsvorrichtung (31) angeordnet ist, um den zweiten Lichtstrahl zu empfangen
**dadurch gekennzeichnet, dass**
der reflektierende Polarisator das linear polarisierte Licht nach einer ersten Richtung durchlässt und das Licht aller anderen Polarisationen zurück wirft;
**dadurch gekennzeichnet, dass**
eine Reflexionsvorrichtung (44), die zwischen der Eintrittsfläche (30) der Polarisationsvorrichtung (3) und der Lichtquelle (1) angeordnet ist, den ersten Lichtstrahl (10) passieren lässt, aber das vom reflektierenden Polarisator (6) zurück geworfene Licht widerspiegelt.

2. Optische Beleuchtungsvorrichtung nach Anspruch 1
**dadurch gekennzeichnet, dass**
- sie eine erste optische Führung (4) beinhaltet, die eine Eintrittsfläche (41) hat, um den ersten Lichtstrahl (10) zu empfangen, eine Austrittsfläche (42), die senkrecht zu ihrer optischen Achse der Eintrittsfläche (30) gegen die Eintrittsfläche der Fresnel Rhombus Polarisatorvorrichtung (3) gedrückt ist, wobei der Querschnitt der erste Führung ungefähr die gleichen Abmessungen wie die Eintrittsfläche (30) aufweist, sowie eine zweite optische Führung (5), die eine Eintrittsfläche (51) hat, die gegen die Austrittsfläche (31) der Fresnel Rhombus Polarisatorvorrichtung (3) gedrückt wird und eine Austrittsfläche, die in Richtung des reflektierenden Polarisator (6) des von der Quelle (1) empfangenen Lichts strahlt, wobei die optische Achse (50) der zweiten optischen Führung senkrecht zur Austrittsfläche (31) der Fresnel Rhombus Polarisatorvorrichtung (3) steht und der Querschnitt der zweiten Führung ungefähr die gleichen Abmessungen wie die Austrittsfläche (31) der Fresnel Rhombus Polarisatorvorrichtung (3) aufweist.

3. Optische Beleuchtungsvorrichtung nach Anspruch 2
**dadurch gekennzeichnet, dass**
die eine oder die andere oder beide optische Führungen als Lichintegratoren arbeiten.

4. Optische Beleuchtungsvorrichtung nach Anspruch 1
**dadurch gekennzeichnet, dass**
die Austrittsfläche (31) der Fresnel Rhombus Polarisatorvorrichtung (3) eine ähnliche Form wie die zur Beleuchtung bestimmte Oberfläche durch die Beleuchtungsvorrichtung hat.

5. Optische Beleuchtungsvorrichtung nach einem der Ansprüche 2, 3 oder 4
**dadurch gekennzeichnet, dass**
die Fresnel Rhombus Polarisatorvorrichtung (3) einen rechteckigen oder quadratischen Querschnitt hat und die optischen Führungen rechteckige oder quadratische Querschnitte besitzen.

6. Optische Beleuchtungsvorrichtung nach Anspruch 2
**dadurch gekennzeichnet, dass**
der reflektierende Polarisator (6) gegenüber der Austrittsfläche (52) der zweiten Führung (5) angeordnet ist.

7. Optische Beleuchtungsvorrichtung nach Anspruch 1 oder 2
**dadurch gekennzeichnet, dass**
der reflektierende Polarisator (6) in einem Winkel von ungefähr 45° zu den einander gegenüber liegenden Seiten (35, 36) der optischen Polarisatorvorrichtung (3) ausgerichtet ist.

8. Optische Beleuchtungsvorrichtung nach Anspruch 1 oder 2
**dadurch gekennzeichnet, dass**
die Reflexionsvorrichtung (44) auf der Eintrittsfläche (30) der Fresnel Rhombus Polarisatorvorrichtung (3) oder der Eintrittsfläche (41) der ersten optischen Führung (4) angeordnet ist.

9. Optische Beleuchtungsvorrichtung nach Anspruch 8
**dadurch gekennzeichnet, dass**
die Reflexionsvorrichtung (44) eine Schicht aus reflektierendem Material enthält und ein nicht reflektierendes Gebiet (43) aufweist, damit der der erste Lichtstrahl (10) durchtreten kann.

10. Optische Beleuchtungsvorrichtung nach Anspruch 1 oder 2
**dadurch gekennzeichnet, dass**
mindestens die beiden sich einander gegenüber liegenden Flächen (35, 36) der optischen Polarisatorvorrichtung (3) auf den Lichtstrahl eine vollständige Phasenverschiebung um 90° zwischen den Polarisatorkomponenten S und P des Lichtstrahls ausüben

11. Optische Beleuchtungsvorrichtung nach Anspruch 10
**dadurch gekennzeichnet, dass**
dass die beiden sich einander gegenüber liegenden Flächen (35, 36) der optischen Polarisatorvorrichtung (3) parallel sind.

12. Optische Beleuchtungsvorrichtung nach den bisherigen Ansprüchen
**dadurch gekennzeichnet, dass**
die Lichtquelle (1) einen durch eine Lichtquelle (11) beleuchteten Reflektor (12) besitzt und das Licht in der Fresnel Rhombus Polarisatorvorrichtung (3) fokussiert.

13. Optische Beleuchtungsvorrichtung nach Anspruch 2
**dadurch gekennzeichnet, dass**
sich die Achse des ersten Lichtstrahls (10) mit der Achse der ersten optischen Führung (4) deckt.

14. Optische Beleuchtungsvorrichtung nach den Ansprüchen 1, 2 oder 11
**dadurch gekennzeichnet, dass**
der erste Lichtstrahl nicht kollimiert ist.

15. Optische Beleuchtungsvorrichtung nach Anspruch 12
**dadurch gekennzeichnet, dass**
der erste Lichtstrahl (10) konvergent ist.

16. Optische Beleuchtungsvorrichtung nach allen vorangegangenen Ansprüchen
**dadurch gekennzeichnet, dass**
sie eine Anzeigevorrichtung (2) hat, die gegenüber dem reflektierenden Polarisator (6) liegt, um so durch das durch den reflektierenden Polarisator geschickte Licht beleuchtet zu werden.

17. Optische Beleuchtungsvorrichtung nach Anspruch 13
**dadurch gekennzeichnet, dass**
die Anzeigevorrichtung ein Flüssigkristallmodulator ist.
